# EUROPÄISCHE PATENTANMELDUNG

(11) **EP 0 697 328 A1**
(43) Veröffentlichungstag der Anmeldung: **21.02.1996**
(21) Anmeldenummer: 95110129.4
(22) Anmeldetag: 29.06.1995
(51) Int. Cl.: B62D 53/08

(54) **Diebstahlsicherung für Sattelanhänger**

(30) Priorität: 17.08.1994 DE 4429125
(71) Anmelder: Schweriner Nutzfahrzeuge GmbH, D-19059 Schwerin (DE)
(72) Erfinder: Koch, Peter, D-10627 Berlin (DE); Christ, Joachim, D-42697 Solingen (DE)
(74) Vertreter: Siewers, Gescha, Dr.

(57) **Zusammenfassung**

Eine Diebstahlsicherung für Sattelanhänger, die freistehende Sattelauflieger (11) für Zugfahrzeuge mit Sattelkupplung (2) gegen unbefugtes Ankuppeln sichert, besteht aus mindestens einer Auffahrschiene (4), die um eine Drehachse (9) in der Sattelplatte (1) durch ihr entfernt vom Königszapfen (3) liegendes Ende nach unten bis mindestens auf die Höhe der Nutunterkante im Königsbolzen (3) aus der Sattelplatte (1) ausschwenkbar und in diesem Zustand arretierbar ist. Durch die entstehende Schräge wird der Sattelauflieger bei unbefugtem Ankuppelversuch sanft angehoben und ebenso sanft wieder abgesetzt, so daß kein Schaden am Sattelauflieger oder am Zugfahrzeug entstehen kann.

## Beschreibung

Die Erfindung betrifft eine Diebstahlsicherung für Sattelanhänger.

Eine Diebstahlsicherung für Sattelanhänger ist z.B. aus der DE-41 04 796 bekannt. Diese Diebstahlsicherung besteht aus einer in Gummi gelagerten Metallhülse, die über den Königszapfen der Anhängevorrichtung geschoben und mit einem Schloß in der Nut des Königszapfens arretiert wird. Es handelt sich dabei um ein separates Teil, das im ungesicherten Zustand nicht mit dem Sattelauflieger verbunden ist. Es besteht also die Gefahr, daß es verlorengeht oder vergessen wird und bei Bedarf dann nicht zur Verfügung steht. Darüber hinaus ist die Kupplungsvorrichtung eines Sattelaufliegers meist gut gefettet. Die Sicherungsvorrichtung wird beim Anbringen also verschmutzt. Die Lagerung der Sicherungsvorrichtung während der Fahrt wird dadurch problematisch und das Anbringen und Entfernen ist eine schmutzige Arbeit.

Aus der DE-29 20 689 ist eine Sicherungsvorrichtung bekannt, die aus einem fest mit dem Sattelauflieger verbundenen Bolzen besteht, der vor dem Königszapfen nach unten ausgefahren werden kann und so das Ankuppeln verhindert. Nachteil dieser Konstruktion ist, daß bei unberechtigten Ankuppelversuchen der Sattelauflieger beschädigt werden kann, wenn das Zugfahrzeug hart auf den Bolzen trifft. Durch den Bolzen besteht darüber hinaus Gefahr für die Sattelkupplung des Zugfahrzeuges, wenn bei berechtigtem Ankuppeln vergessen wurde, den Sicherungsbolzen wieder einzuschieben.

Demgemäß ist es Aufgabe der Erfindung, eine Sicherungsvorrichtung für Sattelanhänger derart weiterzubilden, daß die genannten Nachteile nicht mehr auftreten. Insbesondere soll die Betätigung der Sicherungsvorrichtung so benutzerfreundlich wie möglich gestaltet werden, damit die Sicherung des Sattelaufliegers nicht aus Bequemlichkeits- oder Zeitgründen unterbleibt. Es soll dazu keine schmutzige Arbeit notwendig sein. Auch soll bei Ankuppelversuchen in gesichertem Zustand eine Beschädigung des Sattelaufliegers und des Zugfahrzeuges zuverlässig verhindert werden.

Diese Aufgabe wird erfindungsgemäß dadurch gelöst, daß eine Sicherungsvorrichtung gegen unbefugtes Ankuppeln von freistehenden Sattelaufliegern für Zugfahrzeuge mit Sattelkupplung vorgeschlagen wird, die dadurch gekennzeichnet ist, daß die Sicherungsvorrichtung aus mindestens einer Auffahrschiene besteht, die um eine Drehachse im Kupplungsarm durch ihr entfernt vom Königszapfen liegendes Ende nach unten bis mindestens auf die Höhe der Nutunterkante im Königszapfen aus dem Kupplungsarm ausschwenkbar und in ausgeschwenktem Zustand arretierbar ist.

In einem bevorzugten Ausführungsbeispiel besteht die erfindungsgemäße Sicherungsvorrichtung aus einer in Fahrtrichtung vor dem Königszapfen angebrachten Auffahrschiene. Die Auffahrschiene ist mittig vor dem Königszapfen befestigt. Sie ist in Fahrtrichtung vorne um eine horizontale Drehachse drehbar, so daß ihr hinteres Ende bis knapp unter den Königszapfen abgesenkt werden kann. In dieser Position kann die Auffahrschiene arretiert werden.

So wird gewährleistet, daß der Sattelauflieger keinen Schaden nimmt, wenn widerrechtlich versucht wird, ihn an ein Zugfahrzeug anzukuppeln. Beim Anfahren des Zugfahrzeuges wird der Sattelauflieger durch die Sicherungsschiene sanft angehoben und ebenso sanft wieder abgelassen. Ebenso wenig kann ein Schaden am Zugfahrzeug entstehen, wenn vor dem Ankuppeln vergessen worden ist, die Sicherungsvorrichtung zu entfernen.

Die Sicherungsvorrichtung kann z.B. über eine geeignete Mechanik und eine Handkurbel betätigt werden. Die Mechanik kann komplett in einem geschlossenen Kasten untergebracht werden, damit sie nicht widerrechtlich manipulierbar ist. Die Betätigung der Handkurbel kann über ein Sicherheitsschloß unterbunden werden. So ist eine Betätigung der Sicherungsvorrichtung ohne Schmutzarbeit möglich.

Als zusätzliche Sicherung kann in das mechanische System z.B. ein Unterbrechen der Bordelektrik und/oder der sonstigen Energieversorgung des Sattelanhängers erfolgen. Die Aktivierung dieser zusätzlichen Sicherungseinrichtung kann durch das Schließsystem 8 und 13 zentral erfolgen.

Ein anderes Ausführungsbeispiel sieht vor, daß die Sicherheitsschiene beim Abkuppeln des Zugfahrzeuges automatisch nach unten klappt und arretiert wird. Vor dem Ankuppeln muß dann eine Sperre gelöst werden, so daß die Schiene wieder einklappt. Auf diese Art und Weise kann verhindert werden, daß ein Sattelauflieger aus Vergeßlichkeit oder Bequemlichkeit nach dem Abstellen nicht gesichert wird.

In einem weiteren Ausführungsbeispiel können auch zwei oder mehr Auffahrschienen angebracht werden. Die Schienen können durch Platten verbunden werden, damit eine geschlossene Auflagefläche entsteht. Es ist auch möglich, die Schienen zusätzlich in Querrichtung von außen anzuschrägen, so daß auch beim seitlichen Ankuppelversuch der Sattelauflieger sanft angehoben wird. Ebenso ist es möglich, vom Königszapfen nach rechts und links verlaufend Auffahrschienen anzubringen, die auf ihrer dem Königszapfen zugewandten Seite nach unten ausklappbar sind.

Die Erfindung wird im folgenden anhand der Abbildungen näher erläutert:
- Fig. 1: zeigt eine Sattelkupplung mit erfindungsgemäßer Sicherheitsvorrichtung in gesichertem Zustand im Querschnitt.
- Fig. 2: zeigt eine Sattelkupplung mit erfindungsgemäßer Sicherheitsvorrichtung in angekuppeltem Zustand im Querschnitt.
- Fig. 3: zeigt eine erfindungsgemäße Sicherungsvorrichtung in Draufsicht im Teilschnitt.

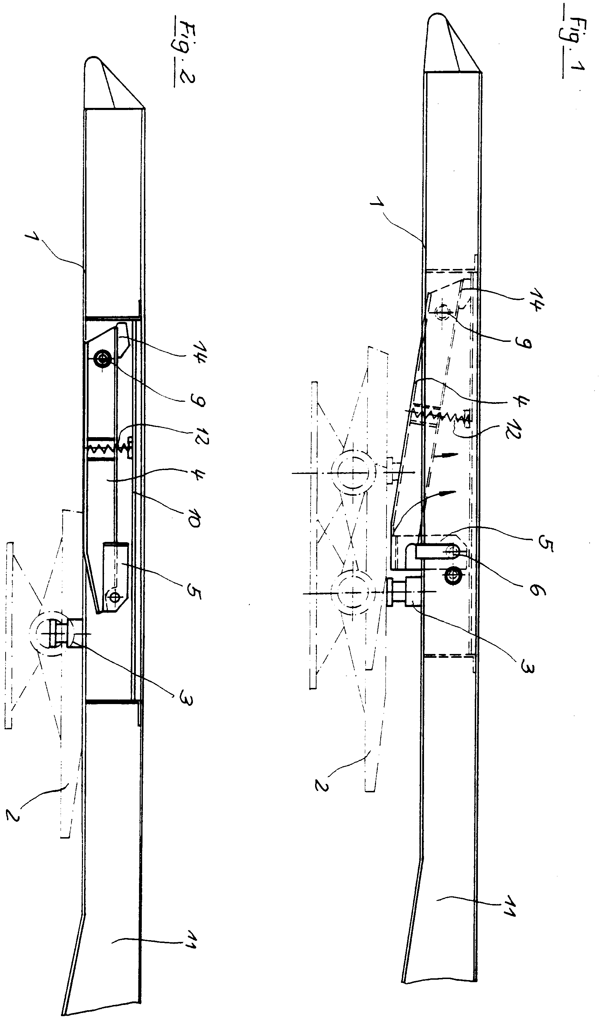

Wie Fig. 1 zu entnehmen ist, ist die Auffahrschiene 4 in gesichertem Zustand nach unten aus der Sattelplatte 1 des Sattelaufliegers 11 herausgeklappt. Sie liegt in Fahrtrichtung vor dem Königszapfen 3 und ist um eine horizontale Drehachse 9 durch ihr entfernt vom Königszapfen 3 liegendes Ende schwenkbar. Wird die Sattelkupplung 2 eines Zugfahrzeuges von vorne in Richtung Königszapfen 3 geschoben, so hebt die Auffahrschiene 4 den ganzen Sattelauflieger 11 an, so daß das Maul der Sattelkupplung 2 nicht in die Nut des Königszapfens 3 greifen kann.

Die Auffahrschiene 4 wird durch eine geeignete mechanische Sperre 5 in ihrem ausgeklappten Zustand gesichert. Es kann vorgesehen sein, daß sie durch Schwerkraft und Druckfeder 12 automatisch beim Abkuppeln des Zugfahrzeuges nach unten ausklappt. Damit sie nur bis in die Höhe des Königszapfens 3 ausklappt, ist ein Anschlag 14 an ihrem oberen Ende vorgesehen, der ein weiteres Ausklappen verhindert.

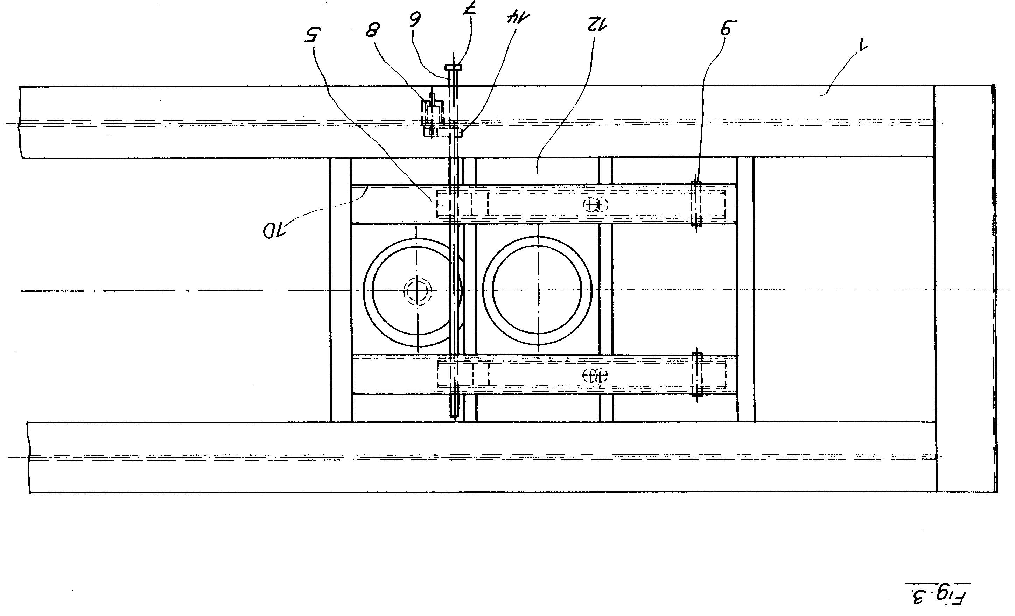

Fig. 2 zeigt, daß die Auffahrschiene 4 in ungesichertem Zustand in einer Auffahrschienenabdeckung 10 in der Sattelplatte 1 untergebracht ist und die Sattelkupplung dann wie vorgesehen in die Nut des Königszapfens eingreifen kann.

In Fig. 3 ist von oben zu sehen, wie die Auffahrschienenabdeckung 10 in der Sattelplatte 1 angebracht ist. Es befinden sich identische Auffahrschienen 4 beidseitig des Königszapfens 3. Mit einem Handgriff 7 wird die Sicherungssperre 5 über eine Ver- und Entriegelungswelle 6 betätigt. Zur Diebstahlsicherung wird die Ver- und Entriegelungswelle 6 über das im Sattelauflieger angebrachte Sicherheitsschloß 8 blockiert.

### Bezugszeichenliste

- 1: Sattelplatte
- 2: Sattelkupplung
- 3: Königszapfen
- 4: Auffahrschiene
- 5: Sicherungssperre
- 6: Ver- und Entriegelungswelle
- 7: Handgriff
- 8: Sicherheitsschloß
- 9: Drehachse
- 10: Auffahrschienenabdeckung
- 11: Sattelauflieger
- 12: Druckfeder
- 13: Sicherungssystem
- 14: Anschlag

## Patentansprüche

1. Sicherungsvorrichtung gegen unbefugtes Ankuppeln von freistehendem Sattelauflieger (11) für Zugfahrzeuge mit Sattelkupplung (2), dadurch gekennzeichnet, daß die Sicherungsvorrichtung aus mindestens einer Auffahrschiene (4) besteht, die um eine Drehachse (9) in der Sattelplatte (1) durch ihr entfernt vom Königszapfen (3) liegendes Ende nach unten bis mindestens auf die Höhe der Nutunterkante im Königsbolzen (3) aus der Sattelplatte (1) ausschwenkbar und in ausgeschwenktem Zustand arretierbar ist.

2. Sicherungsvorrichtung nach Anspruch 1, dadurch gekennzeichnet, daß die Sicherungsvorrichtung aus zwei Auffahrschienen (4) besteht.

3. Sicherungsvorrichtung nach Anspruch 1 oder 2, dadurch gekennzeichnet, daß die Auffahrschienen (4) in Fahrtrichtung vor dem Königsbolzen (3) angebracht sind.

4. Sicherungsvorrichtung nach Anspruch 1 oder 2, dadurch gekennzeichnet, daß die Auffahrschienen (4) quer oder schräg zur Fahrtrichtung angebracht sind.

5. Sicherungsvorrichtung nach einem der Ansprüche 1 bis 4, dadurch gekennzeichnet, daß die Auffahrschienen (4) mit einer über einen Handgriff (7) bedienbaren Sicherungssperre (5) arretierbar sind.

6. Sicherungsvorrichtung nach Anspruch 5, dadurch gekennzeichnet, daß die Sicherungssperre (5) in ausgefahrenem und arretiertem Zustand mit einem Sicherheitsschloß (8) abschließbar ist.

7. Sicherungsvorrichtung nach einem der Ansprüche 1 bis 6, dadurch gekennzeichnet, daß die Auffahrschienen (4) in eingeklapptem Zustand arretierbar sind.

8. Sicherungsvorrichtung nach einem der Ansprüche 1 bis 7, dadurch gekennzeichnet, daß die ausgeklappten Auffahrschienen in zwei zum Königszapfen (3) und zueinander orthogonalen Richtungen auf den Königszapfen hin abfallen.

9. Sicherungsvorrichtung nach einem der Ansprüche 1 bis 8, dadurch gekennzeichnet, daß auf den Auffahrschienen (4)ein Anschlag (14) angebracht ist.

10. Sicherungsvorrichtung nach einem der Ansprüche 1 bis 9, dadurch gekennzeichnet, daß eine zusätzliche Sicherungseinrichtung installiert werden kann, welche durch das Schließsystem (8), (14) die Bordelektrik und/oder die sonstige Engerieversorgung des Sattelanhängers unterbricht.
